**Europäisches Patentamt**

**European Patent Office**

**Office européen des brevets**

(19)

(11) Veröffentlichungsnummer: **0 052 233**
**B1**

(12) **EUROPÄISCHE PATENTSCHRIFT**

(45) Veröffentlichungstag der Patentschrift:
27.12.85

(21) Anmeldenummer: **81108346.8**

(22) Anmeldetag: **15.10.81**

(51) Int. Cl.⁴: **C 08 F 220/12,** C 09 D 3/81 //
(C08F220/12, 220:28, 220:06)

(54) **Verfahren zur Herstellung von Copolymerisaten.**

(30) Priorität: **13.11.80 AT 5569/80**

(43) Veröffentlichungstag der Anmeldung:
**26.05.82 Patentblatt 82/21**

(45) Bekanntmachung des Hinweises auf die Patenterteilung:
**27.12.85 Patentblatt 85/52**

(84) Benannte Vertragsstaaten:
**BE CH DE FR GB IT LI NL SE**

(56) Entgegenhaltungen:
**DE - A - 2 424 952**
**DE - A - 2 703 311**
**FR - A - 2 295 048**

(73) Patentinhaber: **Vianova Kunstharz Aktiengesellschaft,
A-8402 Werndorf (AT)**

(72) Erfinder: **Tulacs, Laszlo, Dipl.-Ing.,
Münzgrabengürtel 21, A-8044 Graz (AT)**
Erfinder: **Hiden, Hans, Corneliusweg 18, A-8051 Graz
(AT)**

(74) Vertreter: **Pitter, Robert, Dr. et al,
Postfach 191 Leechgasse 21, A-8011 Graz (AT)**

BUNDESDRUCKEREI BERLIN

## Beschreibung

Die vorliegende Erfindung betrifft ein Verfahren zur Herstellung von Copolymerisaten auf Acrylatbasis, welche als Bindemittel für Überzugsmittel, welche mit hohem Festkörpergehalt appliziert werden, geeignet sind.

Aus der DE-OS 2 460 329 ist ein Verfahren zur Herstellung niedermolekularer Acrylharze mit geringer Uneinheitlichkeit bekannt, welches zur Formulierung gut verarbeitbarer Überzugsmittel mit hohem Festkörpergehalt verwendet werden können. Bei diesem Verfahren werden die Monomeren in Gegenwart von 6 bis 50 Gew.-%, bezogen auf die Menge der Monomeren, eines thermisch in Radikale zerfallenden Initiators mit einer Halbwertszeit von 0,5 bis 100 Minuten bei 80 bis 120° C zu einem Umsatz von mindestens 80 Mol-% und maximal 98 Mol-% polymerisiert. Dieses Verfahren hat den wesentlichen Nachteil, daß am Ende der Polymerisation relativ große Mengen von Restmonomeren und Restinitiator z. B. im Vakuum abdestilliert werden müssen. Eine weitergehende Polymerisation ist nach diesem Verfahren nicht möglich, da ansonsten die gewünschten Eigenschaften nicht erreicht werden können. Gemäß dieser Literaturstelle ist eine Erhöhung der Polymerisationstemperaturen kein geeignetes Mittel, um solche Produkte herzustellen.

Ein ähnliches Verfahren wird auch in der DE-OS 2 703 311 unter Verwendung teilweise anderer Monomeren beschrieben.

Es wurde nun gefunden, daß man bei Einhaltung bestimmter Reaktionsbedingungen niedrigviskose Produkte, welche mit hohem Festkörperanteil verarbeitet werden können, erhalten kann, ohne daß bei der Herstellung der Produkte zusätzliche Verfahrensschritte notwendig sind.

Die Erfindung betrifft dementsprechend ein Verfahren zur Herstellung von Copolymeren auf Acrylatbasis, welche eine Grenzviskositätszahl innerhalb eines Bereiches von 8—10 ml/g (CHCl$_3$/20° C) aufweisen und welche als Bindemittel zur Formulierung von Überzugsmitteln, die mit hohem Harzfestkörpergehalt appliziert werden können, welche dadurch gekennzeichnet ist, daß man ein Monomerengemisch aus

25—70 Gew.-%  eines Esters der Acryl- und/oder Methacrylsäure mit Monoalkoholen mit 1—12 C-Atomen oder von Gemischen solcher Ester,
15—25 Gew.-%  eines Hydroxyalkylesters der Acryl- oder Methacrylsäure mit 2—4 C-Atomen im Hydroxyalkylrest oder von Gemischen solcher Ester,
1— 3 Gew.-%  Acryl- und/oder Methacrylsäure sowie
0—45 Gew.-%  Styrol und/oder dessen Homologen oder Halogensubstitutionsprodukten

in einem Lösungsmittel oder einem Lösungsmittelgemisch mit einem Aromatengehalt von mind. 98 Vol.-% (ASTM D-1319), einem Siedebereich zwischen 145—180° C, einem Flammpunkt von über 40° C (DIN 51 755), bei 130—160° C in Gegenwart der üblichen für diese Reaktionstemperaturen geeigneten Radikalbildner und gegebenenfalls Regler in der Weise polymerisiert, daß durch Regelung der Zugabegeschwindigkeit zu jedem Zeitpunkt der Polymerisation ein Reaktionsumsatz von 90—100% gewährleistet ist und durch Regelung der Reaktionstemperatur die Molekulargewichtsverteilung ausgedrückt in Grenzviskositätszahlen während der gesamten Reaktionszeit innerhalb eines Bereiches von ±1,0 Einheiten liegt.

Die Erfindung betrifft weiterhin die gemäß diesem Verfahren hergestellten Copolymerisate sowie die daraus durch Kombination mit Vernetzungsmitteln hergestellten Lacke.

Die nach dem erfindungsgemäßen Verfahren hergestellten Produkte zeichnen sich durch eine relativ enge Molekulargewichtsverteilung aus, d. h., daß im Polymerisat 90—100% der Moleküle innerhalb eines Bereiches von ±1,0 Einheiten ausgedrückt in Grenzviskositätszahlen liegen, wobei sich die letzteren zwischen 8 und 10 ml/g (CHCl$_3$/20° C) bewegen. Durch diese Charakteristik ist die Formulierung von festkörperreichen Lacken (High-Solid-Systemen) möglich, welche insbesondere in der Autodecklackierung mit Erfolg angewendet werden können.

Ein besonderer Vorteil sind die günstigen applikatorischen Eigenschaften solcher Formulierungen.

Ein weiterer Vorteil des erfindungsgemäßen Verfahrens gegenüber dem Stand der Technik liegt in der Möglichkeit der Herstellung dieser Produkte, ohne zusätzliche Reaktionsschritte unter Erzielung der vollen Ausbeute und ohne einem Anfall von Destillaten, welche wertvolle Rohstoffe enthalten und welche nicht ohne weiteres einer Wiederverwertung zugeführt werden können.

Die für das erfindungsgemäße Verfahren einsetzbaren Monomeren sind dem Fachmann bekannt. Aus der Reihe der Alkyl(meth)acrylate mit 1—12 C-Atomen im Alkylrest werden bevorzugt solche mit Alkylresten mit 1—4 C-Atomen, wie Methyl(meth)acrylat, Äthyl(meth)acrylat, die Propyl- und Butyl(meth)acrylate eingesetzt.

Von den Hydroxyalkyl(meth)acrylaten kommen die Monoester der (Meth)acrylsäure mit Äthandiol, Propandiol oder Butandiol bzw. Isobutandiol zur Verwendung. Die Gruppe der vinylaromatischen Monomeren umfaßt neben Styrol, z. B. Vinyltoluol, p-tert.Butylstyrol und die Chlorstyrole.

Als Polymerisationsmedium dient ein Lösungsmittel, welches einen Aromatengehalt von mindestens 98 Vol.-% (ASTM D-1319) sowie einen Siedebereich zwischen 145 und 180° C aufweist. Der Flammpunkt nach ABEL-PENSKY (DIN 51 755) liegt über 40° C. Solche Lösungsmittel sind z. B. unter dem Namen SHELLSOL® A oder SOLVESSO® 100 im Handel erhältlich.

Die Durchführung des erfindungsgemäßen Verfahrens erfolgt in der Weise, daß das als Polymerisationsmedium dienende Lösungmittel im Reaktionsgefäß vorgelegt wird. Während des Aufheizens auf die Reaktionstemperatur von 130—160°C wird die im Reaktor befindliche Luft durch Inertgas ersetzt. Die Mischung der Monomeren wird zusammen mit der gegebenenfalls verwendeten Reglersubstanz aus einem Zugabegefäß kontinuierlich zugegeben. Die Zugabe der Initiatorlösung (im gewählten Polymerisationslösungsmittel) wird aus einem zweiten Zugabegefäß zudosiert.

Die Geschwindigkeit der Zugabe wird so gewählt, daß der Reaktionsumsatz jederzeit mindestens 90% beträgt. Die Reaktionstemperatur dient zur Einhaltung des gewünschten Grenzviskositätsbereiches, welcher eine maximale Schwankungsbreite von ±1,0 Einheiten aufweisen darf. Zur Erzielung der gewünschten Eigenschaften der aus den erfindungsgemäß hergestellten Copolymerisaten formulierten Überzugsmitteln muß der Bereich der Grenzviskositätszahlen zwischen 8 und 10 ml/g, gemessen in Cloroform bei 20°C liegen.

Die laufende Kontrolle des Polymerisationsumsatzes kann entweder durch Bestimmung des Festkörpergehaltes oder in einfacher und schneller Weise durch, gegebenenfalls kontinuierliche Dichtebestimmung oder durch Bestimmung der Brechungsindices erfolgen.

Die Bestimmung der Grenzviskositätszahl erfolgt in folgender Weise:

Eine Probe, deren Festkörpergehalt in üblicher Weise bestimmt wurde, wird mit Chloroform auf einen Festkörpergehalt von genau 2% verdünnt. Die Messung erfolgt in einem KPG-UBBELOHDE-Viskosimeter mit hängendem Kugelniveau (Hersteller: SCHOTT, Jenaer Glaswerk SCHOTT & Gen., Mainz).

$$\text{Berechnung } [\eta] \text{ ml/g} = \log \frac{t}{to} \cdot 76,160491$$

(t = Durchlaufzeit der Meßlösung, to = Durchlaufzeit von CHCl₃).

Die erfindungsgemäß hergestellten Copolymerisate dienen in Kombination mit Vernetzungsmitteln als Bindemittel für die Formulierung gut applizierbarer und hochwertiger Lacke, welche auch für Autodecklacke geeignet sind. Als Vernetzungsmittel dienen die bekannten Aminoharze, insbesondere verätherte Melamin-Formaldehyd-Kondensate sowie die für diesen Zweck verwendbaren blockierten Polyisocyanate. Die Lacke können durch Handspritzen oder durch elektrostatisches Spritzen als Klarlack oder in pigmentierter Form aufgebracht werden. Sie sind auch für die Pigmentierung mit Metallpigmenten hervorragend geeignet. Die sogenannten »metallic«-Decklacke können nach dem Einschichtverfahren oder nach dem Zweischichtverfahren (»2-Coat-1-bake«-Verfahren, mit einem pigmentierten Vorlegelack mit einem Klarlacküberzug) verwendet werden. Die Formulierung solcher Lacke sowie die Verwendung von Zusatz- und Hilfsstoffen, die Auswahl der Pigmente und Füllstoffe sowie die Verarbeitungsbedingungen gehören zum Stand des Wissens für den Fachmann.

Die folgenden Beispiele erläutern die Erfindung. Alle Angaben in Teilen oder Prozenten gelten, sofern nicht anders angegeben, für Gewichtseinheiten.

Beispiel 1

In einem mit Rührer, Thermometer und Inertgasleitung ausgestattetem Reaktionsgefäß werden 30 Teile eines Lösungsmittels mit mindestens 98 Vol.-% Aromatengehalt (ASTM D-1319), einem Siedebereich von 160—182°C (ASTM D-1078/87), einen Flammpunkt von 42,8°C (ABEL-PENSKY) und einem Kauri-Butanolwert (ASTM D-1133) (= Lösungsmittel A), auf eine Reaktionstemperatur von 148°C gebracht. Eine Mischung, bestehend aus 2 Teilen Acrylsäure, 20 Teilen Hydroxyäthylenacrylat, 60 Teilen Butylacrylat, 18 Teilen Methylmethacrylat und 1 Teil tert.-Dodecylmerkaptan wird parallel mit einer Mischung von 2 Teilen Di-tert.-butylperoxid (verdünnt mit 10 Teilen Lösungsmittel A) so zugegeben, daß immer ein Polymerisationsumsatz von 100%, mindestens jedoch von 90%, gegeben ist. Die Kontrolle des Polymerisationsumsatzes erfolgt stündlich durch Festkörperbestimmung. Die Zugabegeschwindigkeit erfolgt so, daß die zugegebene Menge der Monomeren jeweils sofort einpolymerisiert wird und ein Polymerisationsumsatz von mindestens 90% jederzeit gewährleistet ist.

| Probe nach Stunden | Festkörpergehalt, % | | Polymerisations-Umsatz, % | Grenzviskositätszahl (CHCl₃/20°C) |
|---|---|---|---|---|
| | gemessen | berechnet | | |
| 1 | 22,2 | 24,2 | 91,0 | 8,7 |
| 2 | 35,4 | 38,5 | 91,9 | 9,0 |
| 3 | 45,7 | 47,6 | 96,0 | 9,1 |

3

Fortsetzung

| Probe nach Stunden | Festkörpergehalt, % gemessen | berechnet | Polymerisations- Umsatz, % | Grenzviskositätszahl (CHCl₃/20°C) |
|---|---|---|---|---|
| 4 | 53,1 | 54,0 | 98,3 | 8,9 |
| 5 | 58,5 | 58,8 | 99,5 | 9,2 |
| 6 | 61,4 | 62,5 | 98,2 | 9,4 |
| 7 | 62,7 | 65,4 | 95,9 | 9,3 |
| 8 | 66,9 | 67,8 | 98,7 | 9,0 |
| 9 | 68,1 | 69,8 | 97,6 | 9,2 |
| 10 | 71,2 | 71,4 | 99,7 | 9,0 |

Die Steuerung zur Erzielung der Molekulargewichte, ausgedrückt in Grenzviskositätszahlen, erfolgt durch Regulierung der Reaktionstemperatur zwischen 145 und 150°C, wobei durch eine Temperaturerhöhung eine Erniedrigung der Grenzviskositätszahl bewirkt wird. Das Copolymerisat besitzt einen Festkörpergehalt von 71,2%, eine Säurezahl von 13,5 mg KOH/g, eine berechnete Hydroxylzahl von 96,5 mg KOH/g äquivalent und eine Grenzviskositätszahl von 9,0 ml/g (CHCl₃/20°C).

Ein Überzugslack (farblos) für eine Zweischicht-Metalleffektlackierung wird wie folgt hergestellt:

53,4 Teile  Copolymerisat aus Beispiel 1,
22,1 Teile  des auch als Polymerisationsmedium eingesetzten Lösungsmittels A,
7,9 Teile  einer 10gew.-%igen Lösung einer oder mehrerer UV-Absorber der Benzotriazol- und Piperydylsebacatklasse in Lösungsmittel A,
0,5 Teile  eines Verlaufmittels auf Siliconbasis,
16,1 Teile  eines handelsüblichen mit Isobutanol verätherten Melamin-Formaldehyd-Kondensates (durchschnittliches Molverhältnis 1 Melamin-6-Formaldehyd, 3 Mol Isobutanol).

Der so hergestellte Klarlack wird mit Lösungsmittel A auf eine Spritzviskosität von 21—23 s DIN 53 211/20°C verdünnt und im Naß-in-Naß-Verfahren auf einen Metalleffekt-Vorlegelack appliziert. Der Lackfestkörper des Überzugslackes beträgt bei Spritzviskosität über 40%. Der Metalleffekt-Vorlegelack kann sowohl auf Basis des im Überzugslack verwendeten Copolymerisats als auch z. B. mit einem geeigneten Alkydharz in Kombination mit Celluloseacetatbutyrat und einem Melaminharz formuliert werden. Die Härtung des Überzugslackes erfolgt gemeinsam mit dem Vorlegelack durch Einbrennen von 30 Minuten bei 135°C. Die Trockenfilmstärke des Überzugslackes beträgt 35—40 µm.

Der so hergestellte Lackfilm besitzt folgende Eigenschaften:

Glanz nach Lange (45°):                   110%
Pendelhärte Persoz NF-T 30 016:     ca. 300 s
Erichsentiefung DIN 53 156:           ca. 7 mm
Gitterschnitt DIN 53 151:              GT 4
Bezinbeständigkeit:                      10 min

## Beispiel 2

In einem mit Rührer, Thermometer und Inertgasleitung ausgestatteten Reaktionsgefäß werden 30 Teile Lösungmittel A gefüllt und auf eine Reaktionstemperatur von 145°C gebracht.

Mischung, bestehend aus 1 Teil Methacrylsäure, 20 Teilen Butylacrylat, 18 Teilen Hydroxyäthylmethacrylat, 4 Teilen Hydroxyäthylacrylat, 20 Teilen Butylmethacrylat, 37 Teilen Styrol und 1 Teil tert.-Dodecylmerkaptan wird parallel mit einer Mischung von 2 Teilen Di-tert.-butylperoxid (verdünnt mit 10 Teilen Lösungsmittel A) so zugegeben, daß der Polymerisationsumsatz immer mindestens 95% beträgt.

0 052 233

| Probe nach Stunden | Festkörpergehalt, % gemessen | berechnet | Polymerisations-Umsatz, % | Grenzviskositätszahl (CHCl₃/20°C) |
|---|---|---|---|---|
| 1 | 31,1 | 34,4 | 90,4 | 9,7 |
| 2 | 47,6 | 50,0 | 95,2 | 9,4 |
| 3 | 57,5 | 58,8 | 97,8 | 9,5 |
| 4 | 62,2 | 64,4 | 96,6 | 9,4 |
| 5 | 67,7 | 68,4 | 99,0 | 9,4 |
| 6 | 71,4 | 71,4 | 100,0 | 9,5 |

Das Copolymerisat besitzt einen Festkörpergehalt von 71,4%, eine Säurezahl von 6,6 mg KOH/g, eine berechnete Hydroxylzahl von 96,7 mg KOH/g äquivalent und eine Grenzviskositätszahl von 9,5 ml/g.

Ein weißer Autodecklack wird aus folgenden Bestandteilen hergestellt:

394 Teile  Copolymerisat aus Beispiel 2,
185 Teile  Lösungsmittel A,
306 Teile  Titandioxid TiO₂,
112 Teile  des in Beispiel 1 verwendeten Melamin-Formaldehyd-Kondensates (71%ig),
  2 Teile  eines Verlaufmittels auf Siliconbasis.

Der Lackfestkörper beträgt ca. 67%, die Auslaufviskosität nach DIN 53 211/20°C ca. 70 s. Der Lack wird mit einer Spritzverdünnung (bestehend aus Lösungsmittel A-Xylol im Verhältnis 2 : 1) auf eine Spritzviskosität von ca. 20 s verdünnt und dann auf grundierte Stahlbleche gespritzt. Die Bleche werden nach einer Ablüftzeit von 20 Minuten bei einer Temperatur von 135°C 30 Minuten lang eingebrannt. Es resultiert ein Lackfilm, der einen Glanz nach Lange von 110% (45°), eine Pendelhärte (Persoz-NF-T 30-016) von 250 Sekunden, einen Gitterschnitt (DIN 53 151) von 3, eine Erichsentiefung (DIN 53 156) von 6 und eine Beständigkeit gegen Benzin von über 5 Minuten besitzt.

**Patentansprüche**

1. Verfahren zur Herstellung von Copolymerisaten auf Acrylatbasis, welche eine Grenzviskositätszahl innerhalb eines Bereiches von 8—10 mg/g (CHCl₃/20°C) aufweisen und welche als Bindemittel zur Formulierung von Überzugsmitteln geeignet sind, die mit hohem Festkörpergehalt appliziert werden können, dadurch gekennzeichnet, daß man ein Monomerengemisch aus

25—70 Gew.-%  eines Esters der Acryl- oder Methacrylsäure mit Monoalkoholen mit 1—12 C-Atomen oder von Gemischen solcher Ester,
15—25 Gew.-%  eines Hydroxyalkylesters der Acryl- oder Methacrylsäure mit 2—4 C-Atomen im Hydroxyalkylrest oder von Gemischen solcher Ester,
  1— 3 Gew.-%  Acryl- oder Methacrylsäure sowie
  0—45 Gew.-%  Styrol und/oder dessen Homologen oder Halogensubstitutionsprodukten

in einem Lösungmittel oder einem Lösungmittelgemisch mit einem Aromatengehalt von mind. 98 Vol.-% (ASTM D-1319), einem Siedebereich zwischen 145 und 180°C, einem Flammpunkt von über 40°C (DIN 51 755) bei 130—160°C in Gegenwart eines der üblichen für diese Reaktionstemperaturen geeigneten Radikalbildners und gegebenenfalls eines Reglers bis zu einem weitgehend vollständigen Umsatz in der Weise polymerisiert, daß durch Regelung der Zugabegeschwindigkeit zu jedem Zeitpunkt der Polymerisation ein Reaktionsumsatz von 90—100% gewährleistet ist und durch Regelung der Reaktionstemperatur die Molargewichtsverteilung ausgedrückt in Grenzviskositätszahlen während der gesamten Reaktionszeit innerhalb eines Bereiches von ±1,0 Einheiten liegt.

2. Ofentrocknende Lacke auf Basis der gemäß Anspruch 1 hergestellten Bindemittel in Kombination mit Vernetzungsmittel.

3. Verwendung der Lacke gemäß Anspruch 2 für festkörperreiche Lacke.

4. Verwendung der Lacke gemäß den Ansprüchen 2 und 3 für Formulierungen, welche Metallpigmente enthalten.

5

5. Verwendung der Lacke gemäß den Ansprüchen 2 und 3 zur Formulierung von Überzugslacken für metallpigmentierte Zweischichtlackierungen.


## Claims

1. Process for producing copolymers based on acrylates, having an intrinsic viscosity within a range of from 8—10 ml/g (CHCl₃/20°C), suitable as binders for the formulation of coating compositions which can be applied with a high solids content, characterised in that a monomer blend consisting of

25—70%  by weight of an ester of acrylic or methacrylic acid with monoalcohols with 1—12 C-atoms or of mixtures of such esters,
15—25%  by weight of a hydroxyalkylester of acrylic or methacrylic acid with 2—4 C-atoms in the hydroxyalkyl radical or mixtures of such esters,
1— 3%  by weight of acrylic or methacrylic acid and
0—45%  by weight styrol and/or ist homologues or halogensubstituted products

is polymerised at 130—160°C in a solvent or solvent blend with a content of aromatic hydrocarbons of at least 98% by weight (ASTM D-1319), a boiling range of between 145 and 180°C, a flash point of over 40°C (DIN 51 755), in the presence of a free radical initiator functioning at the reaction temperatures, and optionally a chain transfer agent, to substantially complete conversion such that by monitoring the rate of addition, a conversion of 90—100% is safeguarded at any time during polymerisation and that by monitoring the reaction temperature, the molecular weight distribution, reflected in the intrinsic viscosity, lies within a range of ±1,0 unit during the whole reaction time.

2. Stoving paints based on the binders produced according to claim 1 in combination with a crosslinker.

3. Use of the paints according to claim 2 for high solid paints.

4. Use of the paints according to claims 2 and 3 for formulations containing metallic pigments.

5. Use of the paints according to claims 2 and 3 for the formulation of clear top coats for metallic two coat systems.


## Revendications

1. Procédé de préparation de copolymérisat à base d'acrylate présentant un indice de viscosité limite situé à l'intérieur d'un domaine de 8—10 ml/g CHCl₃/20°C) et qui peuvent être appliqués en tant qu'agents liants à teneur en matières sèches résine élevée pour la formulation d'agents de revêtement, lequel procédé est caractérisé par le fait que l'on polymérise un mélange de monomères constitué par

25—70%  en poids d'un ester de l'acide acrylique ou méthacrylique avec des monoalcools ayant 1—12 atomes de carbone, étant ententdu que l'on peut également utiliser des mélanges des ces esters,
15—25%  en poids d'un ester d'hydroxyalcoyle de l'acide acrylique ou méthacrylique ayant 2—4 atomes de carbone dans le radical hydroxyalcoyle, étant entendu que l'on peut également utiliser des mélanges de tels esters,
1— 3%  en poids d'acide acrylique et/ou méthacrylique, et
0—45%  en poids de styrène et/ou des homologues de ce dernier ou des produits de substitution par les halogènes,

dans un solvant ou dans un mélange de solvants ayant une teneur en produits aromatiques d'au moins 98 volumes-% (ASTM D-1319), un domaine d'ébullition entre 145—180°C, un point d'inflammation supérieur à 40°C (DIN 51 755), à 130—160°C en présence d'un des agents formateurs de radicaux usuels pour ces température de réaction et éventuellement en présence d'un régulateur jusqu'à une conversion sensiblement complète de telle sorte que, par réglage de la vitesse d'addition, on garantit à chaque instant de la polymérisation un rendement ou conversion de réaction de 90—100%, la répartition des poids moléculaires étant située par réglage de la température de réaction pendant toute la durée de la réaction à l'intérieur d'un domaine de ±1,0 unité exprimée en indice de viscosité limite.

2. Vernis ou peinture séchant au four à base des agents liants préparés selon la revendication 1 en combinaison avec un agent de réticulation.

3. Application des vernis ou peintures selon la revendication 2 pour des vernis ou peintures à haute teneur en matières sèches.

4. Application des vernis ou peintures selon les revendications 2 et 3 pour des formulations contenant des pigments métalliques.

5. Application des vernis ou peinture selon les revendications 2 et 3 pour la formulation de vernis ou peintures de revêtement incolores pour des peintures ou vernis à deux couches pigmentées métalliquement.